# EUROPEAN PATENT SPECIFICATION

(11) **EP 3 715 086 B1**
(45) Date of publication and mention of the grant of the patent: **15.06.2022**
(21) Application number: 20166277.2
(22) Date of filing: 27.03.2020
(51) Int. Cl.: B29C 45/17, B29C 45/72

(54) **INJECTION MOLDING MACHINE, CONTROL UNIT, AND COOLING UNIT**
SPRITZGIESSMASCHINE, STEUEREINHEIT UND KÜHLEINHEIT
MACHINE DE MOULAGE PAR INJECTION, UNITÉ DE COMMANDE ET UNITÉ DE REFROIDISSEMENT

(30) Priority: 29.03.2019 JP 2019069417
(43) Date of publication of application: 30.09.2020
(73) Proprietor: Sumitomo Heavy Industries, Ltd., Tokyo 141-6025 (JP)
(72) Inventor: MARUTA, Yosuke, Chiba-shi, Chiba, 263-0001, (JP); TOYOSHIMA, Kento, Chiba-shi, Chiba, 263-0001, (JP); EBATA, Koichiro, Chiba-shi, Chiba, 263-0001, (JP); NEMOTO, Takuya, Chiba-shi, Chiba, 263-0001, (JP); YAMAGUCHI, Hiroshi, Chiba-shi, Chiba, 263-0001, (JP); ONUMA, Junichi, Chiba-shi, Chiba, 263-0001, (JP)
(74) Representative: Louis Pöhlau Lohrentz

(56) References cited:
- WO-A1-2019/014173
- GB-A- 2 558 328
- JP-A- H09 254 214
- US-A1- 2014 199 191
- US-A1- 2015 285 255
- US-A1- 2017 363 093

## Description

### BACKGROUND OF THE INVENTION

### Field of the Invention

Certain embodiments of the present disclosure relate to an injection molding machine, a control unit, and a cooling unit.

### Description of Related Art

Japanese Patent No. 4100660 discloses that a heat sink and a cooling fan are disposed inside a housing. An airflow generated by an operation of the cooling fan flows into a flow path between heat radiation fins of the heat sink, and flows out of the housing through a window of the housing. Japanese Patent Publication No. H09 254214 discloses an electric injection molding machine provided with a drive unit having a servo motor as a drive source, and more particularly a servo amplifier cooling structure for supplying power as a servo motor driver.

### SUMMARY OF THE INVENTION

In a case where the heat sink and the fan are disposed inside the housing as disclosed in Japanese Patent No. 4100660, the airflow is generated inside the housing along with the operation of the fan. In this manner, cooling is promoted in a heating element (for example, a CPU) other than an intelligent power module (IPM) inside the housing. However, the housing is constructed using a plurality of housing plates, and has a wire drawing port. Therefore, dust such as dirt, powder dust, and a particulate matter (PM) is taken into the housing through a gap of the housing. The dust may cause an unintended short circuit between electrical components, or may cause unintended heat storage of the electrical components, thereby leading to a possibility that an operation of a control system stored in the housing may be unstable. Therefore, it is desirable to compatibly achieve efficiently cooling an IPM motor driving element and suppressing dust accumulation inside the casing of a control unit.

According to an aspect of the present disclosure, there is provided a control unit of the injection molding machine. The control unit of the injection molding machine includes a motor driving element disposed in an internal space of a control unit housing, and a cooling unit for cooling the motor driving element. The cooling unit includes a flow path member including a heat sink thermally connected to the motor driving element, and at least one first fan forming a flow path together with at least the flow path member, and configured to generate a first airflow flowing through the flow path. The flow path has an inlet in a first side surface portion of the control unit housing, has an outlet in a second side surface portion of the control unit housing, and is configured to prevent the first airflow flowing in the flow path from flowing out of the flow path in the control unit housing by an operation of the first fan. The cooling unit further includes at least one duct that forms the flow path together with the flow path member and the first fan, and the duct is attached to the flow path member in a form of surrounding the first fan. The cooling unit further includes a sealing material disposed between the control unit housing and the duct.

According to another aspect of the present disclosure, there is provided a cooling unit for cooling a heating element of an injection molding machine. The cooling unit includes a flow path member including a heat sink thermally connected to the motor driving element, and at least one fan forming a flow path together with at least the flow path member, and configured to generate an airflow flowing through the flow path. The flow path has an inlet in a first side surface portion of the control unit housing of the injection molding machine, has an outlet in a second side surface portion of the control unit housing, and is configured so that an operation of at least one fan prevents the airflow generated in the flow path from flowing out to the internal space of the control unit housing.

According to still another aspect of the present disclosure, there is provided a control unit of an injection molding machine. The control unit includes a motor driving element disposed in an internal space of a control unit housing, an injection molding machine controlling CPU disposed in the internal space of the control unit housing, a cooling unit for cooling the motor driving element, the cooling unit including a flow path member including a heat sink thermally connected to the motor driving element, and at least one first fan forming a flow path together with at least the flow path member, and configured to generate a first airflow flowing through the flow path, and a second fan that draws air into the internal space from an external space of the control unit housing and generates a second airflow in the internal space of the control unit housing. The flow path of the cooling unit has an inlet in a first side surface portion of the control unit housing, has an outlet in a second side surface portion of the control unit housing, and is configured to prevent the first airflow flowing in the flow path from flowing out of the flow path in the control unit housing by an operation of the first fan. The first side surface portion is located on a non-operation side and the second side surface portion is located on a ground side.

According to the aspects of the present disclosure, it is possible to compatibly achieve efficiently cooling the motor driving element and suppressing dust accumulation inside the control unit housing.

### BRIEF DESCRIPTION OF THE DRAWINGS

Fig. 1 is a view illustrating a schematic configuration of an injection molding machine according to an embodiment of the present disclosure.
Fig. 2 is a schematic block diagram illustrating a part of a control system of the injection molding machine according to the embodiment of the present disclosure.
Fig. 3 is a view illustrating a schematic configuration of a control unit of the injection molding machine according to the embodiment of the present disclosure, and an airflow in an internal space of a control unit housing is indicated by a broken arrow.
Fig. 4 is a schematic exploded perspective view of a cooling unit according to the embodiment of the present disclosure.
Fig. 5 is a side view of the cooling unit according to the embodiment of the present disclosure.

### DETAILED DESCRIPTION OF THE INVENTION

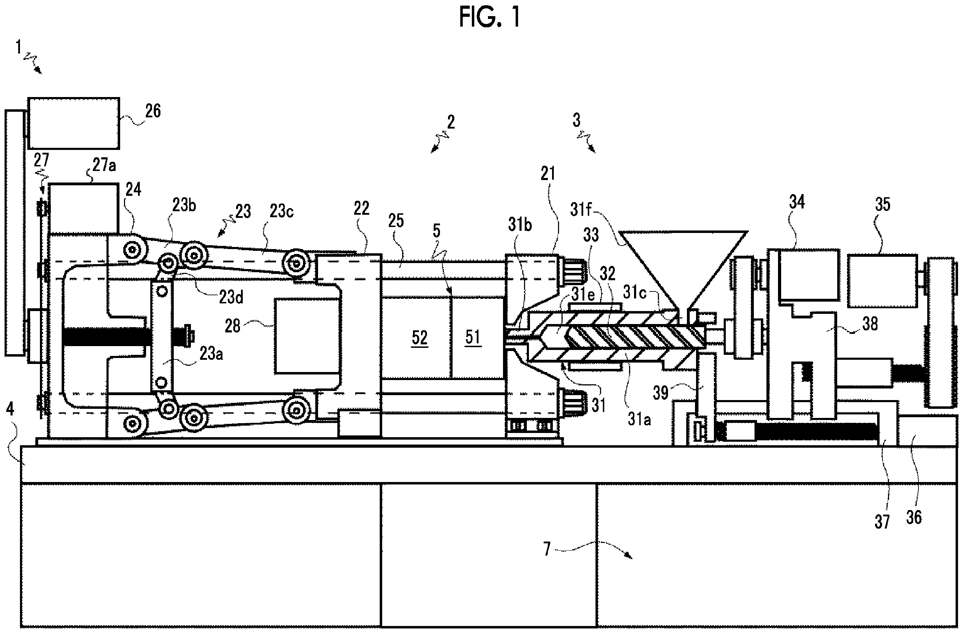

Hereinafter, embodiments having no limitation and features of the present disclosure will be described with reference to Figs. 1 to 5. Those skilled in the art can combine the respective embodiments and/or respective features without needing excessive description, and can understand synergistic effects achieved by the combination. Repeated description between the embodiments will be basically omitted. The reference drawings are provided mainly for the purpose of describing the invention, and are simplified for convenience of the drawings. The respective features are not valid only for an injection molding machine disclosed herein, and will be understood as universal features which are also applicable to various other injection molding machines which are not disclosed herein.

As illustrated in Fig. 1, an injection molding machine 1 has a mold clamping unit 2 and an injection unit 3 which are mounted on a common or different base 4. The injection molding machine 1 continuously manufactures a molding product, based on a cooperative operation between the mold clamping unit 2 and the injection unit 3. The mold clamping unit 2 is configured to repeat a loop of mold closing, mold clamping, and mold opening. The injection unit 3 is configured to repeat a loop of a plasticizing process, a filling process, and a holding pressure process. The mold unit 5 is attached to the mold clamping unit 2. A specific configuration of the mold unit 5 is determined by a shape, a size, and the number of the injection molding products. The mold unit 5 can be a two-plate type or a three-plate type. In some forms, the mold unit 5 has one or more stationary molds 51 and one or more movable molds 52.

Hereinafter, a configuration and an operation of the mold clamping unit 2 and the injection unit 3 will be described in more detail. The mold clamping unit 2 has a stationary platen 21, a movable platen 22, a toggle mechanism 23, a toggle support 24, a plurality of tie bars 25, a mold clamping motor 26, and a mold space adjustment mechanism 27. A driving force generated by the mold clamping motor 26 is transmitted to the toggle mechanism 23, and the movable platen 22 is moved along the tie bar 25. In this manner, an interval can be changed between a facing surface of the stationary platen 21 and a facing surface of the movable platen 22. When the interval is large between the stationary platen 21 and the movable platen 22, the mold unit 5 can be introduced into a space between the stationary platen 21 and the movable platen 22. In a state where the mold unit 5 is introduced into the space between the stationary platen 21 and the movable platen 22, the stationary mold 51 can be attached to the stationary platen 21, and the movable mold 52 can be attached to the movable platen 22. After the stationary mold 51 is attached to the stationary platen 21, the movable mold 52 may be attached to the movable platen 22. Conversely, after the movable mold 52 is attached to the movable platen 22, the stationary mold 51 may be attached to the stationary platen 21.

In a state where the mold unit 5 is attached to the mold clamping unit 2, the movable platen 22 is moved as described above. In this manner, the mold closing, the mold clamping, and the mold opening of the mold unit 5 are performed. The mold closing is a state where the facing surface of the stationary mold 51 and the facing surface of the movable mold 52 come into contact with each other so that a cavity portion of the stationary mold 51 and a cavity portion of the movable mold 52 spatially communicate with each other. The mold clamping is a state where the movable mold 52 is strongly pressed by the stationary mold 51 so as to withstand a material injection pressure applied from the injection unit 3. The mold opening is a state where the facing surface of the stationary mold 51 and the facing surface of the movable mold 52 do not come in contact with each other so as to leave the interval therebetween.

The mold clamping unit 2 includes an ejector unit 28 for discharging a molding product from the mold unit 5. For example, the ejector unit 28 is attached to e rear portion of the movable platen 22. The ejector unit 28 includes an ejector rod and an ejector motor that supplies power to the ejector rod. A rotation torque generated by the ejector motor is converted into a linear force by a ball screw, and is transmitted to the ejector rod. When the ejector rod is moved forward, an ejector plate of the mold unit 5 is pushed by the forward movement. The molding product of the stationary mold 51 is pushed by an ejector pin, and is discharged from the mold unit 5. The injection molding machine 1 operates the ejector unit in synchronization with the mold opening.

The toggle mechanism 23 has a crosshead 23a that receives a driving force from the mold clamping motor 26, first and second links 23b and 23c rotatably coupled to each other between the toggle support 24 and the movable platen 22, and a third link 23d that couples the crosshead 23a and the first link 23b to each other. A rotation force generated by the mold clamping motor 26 is converted into a linear force by a conversion device such as a ball screw, and is applied to the crosshead 23a. For example, in response to forward rotation of an output shaft of the mold clamping motor 26, the crosshead 23a moves straight toward the stationary platen 21, an angle formed between the first link 23b and the second link 23c increases, and the movable platen 22 moves straight toward the stationary platen 21. When the movable mold 52 is attached to the movable platen 22, the movable mold 52 also moves straight. In response to reverse rotation of the output shaft of the mold clamping motor 26, the crosshead 23a is moved in a direction away from the stationary platen 21, the angle formed between the first link 23b and the second link 23c decreases, and the movable platen 22 moves straight away in the direction away from the stationary platen 21. When the movable mold 52 is attached to the movable platen 22, the movable mold 52 also moves straight in the same direction. In the mold clamping unit 2, a direction in which the movable platen 22 and the movable mold 52 attached thereto move toward the stationary platen 21 and the stationary mold 51 attached thereto can be defined as forward, and a direction opposite thereto can be defined as rearward.

The toggle mechanism 23 amplifies the driving force of the mold clamping motor 26, and transmits the driving force to the movable platen 22. An amplification magnification is called a toggle magnification. The toggle magnification varies according to the angle formed between the first link 23b and the second link 23c. The angle formed therebetween and a position of the crosshead 23a are correlated. Therefore, the angle formed therebetween can be obtained from the position of the crosshead 23a. When the angle formed therebetween is 180°, the toggle magnification is maximized. A form is also assumed in which a hydraulic cylinder is adopted to move the movable platen 22 without adopting the toggle mechanism 23.

The mold space adjustment mechanism 27 is configured to adjust a position of the toggle support 24 with respect to the stationary platen 21 (forward-rearward interval between both of these, that is, a mold space). The mold space adjustment mechanism 27 includes a mold space adjustment motor 27a. The rotation force generated by the mold space adjustment motor 27a is transmitted to a nut screwed to a screw shaft in a rear end portion of the tie bar 25, and the position of the toggle support 24 along the tie bar 25 is changed. 24. The position of the toggle support 24 with respect to the stationary platen 21 (that is, the interval between both of these) is changed. The rotation force of the mold space adjustment motor 27a is transmitted to the nut via a transmission element such as a belt and a gear (or directly).

The injection unit 3 supplies a molten plastic material to the mold unit 5 attached to the mold clamping unit 2. The injection unit can be an in-line screw type or a pre-plastic type. In the description herein, an example will be described in which the injection unit is the in-line screw type. However, the present disclosure is not limited thereto. The injection unit 3 has a cylinder 31, a screw 32, a heater 33, a plasticizing motor 34, an injection motor 35, a moving motor 36, a guide rail 37, a first movable support 38, and a second movable support 39.

The cylinder 31 is a metal cylindrical member that accommodates the screw 32, and has a cylinder body 31a and a nozzle portion 31b. The cylinder body 31a accommodates the screw 32. The nozzle portion 31b has a straight flow path having a smaller flow path diameter than a flow path diameter of the cylinder body 31a, and has a discharge port for discharging a molten plastic material supplied from the cylinder body 31a. The cylinder body 31a has a material supply port 31c for receiving a plastic material, for example, a pellet supplied from a hopper 31f. The pellet is melted in response to heat transmitted from the heater 33 via the cylinder body 31a, and is conveyed forward, that is, toward the nozzle portion 31b in response to the rotation of the screw 32. As will be understood from the following description, a moving direction of the screw 32 during filling is a forward side, and a moving direction of the screw 32 during plasticizing is a rearward side.

The screw 32 has a shaft portion and a flight spirally disposed on an outer periphery of the shaft portion, and conveys a plastic material in a solid and molten state to a front side of the cylinder 31 in response to the rotation. The screw 32 can be rotated by receiving the rotation force from the plasticizing motor 34. For example, the output shaft of the plasticizing motor 34 and the screw 32 are mechanically connected to each other via a belt. The screw 32 can move forward (side closer to the nozzle portion 31b) and rearward (side away from the nozzle portion 31b) inside the stopped cylinder 31 by receiving the driving force from the injection motor 35. For example, the output shaft of the injection motor 35 is connected to a screw shaft of a ball screw via a belt. The first movable support 38 is fixed to a nut of the ball screw. The screw 32 is rotatably attached to the first movable support 38. Similarly, a main body portion of the plasticizing motor 34 is fixed to the first movable support 38. The first movable support 38 moves in response to the operation of the injection motor 35, and the screw 32 and the plasticizing motor 34 move. The first movable support 38 is movably mounted on the guide rail 37 fixed to the base 4. A direction toward the mold clamping unit 2 can be referred to as forward, and a direction away from the mold clamping unit 2 can be referred to as rearward.

The cylinder 31 receives the driving force from the moving motor 36, moves forward to the mold clamping unit 2, and moves rearward away from the mold clamping unit 2. For example, the output shaft of the moving motor 36 is connected to the screw shaft of the ball screw. The second movable support 39 is coupled to the nut of the ball screw via an elastic member (for example, a spring). The cylinder 31 is fixed to a rear end portion of the second movable support 39. The second movable support 39 and the cylinder 31 move in response to the operation of the moving motor 36. The second movable support 39 is movably mounted on the guide rail 37 fixed to the base 4. An instrument such as an encoder can be incorporated in each motor. The motor is subjected to feedback control, based on an output signal of the encoder.

A backflow prevention ring (not illustrated) is attached to a tip end (front end) of the screw 32. The backflow prevention ring suppresses a backflow of the molten plastic material stored in a storage space 31e, when the screw 32 is moved toward the nozzle portion 31b inside the cylinder 31.

The heater 33 is attached to the outer periphery of the cylinder 31, and generates heat by energization subjected to feedback control, for example. The heater 33 is attached to the outer periphery of the cylinder body 31a and/or the nozzle portion 31b in any desired manner.

According to a schematic operation of the injection unit 3, the heat is applied to the cylinder 31 from the heater 33, and the pellet supplied into the cylinder body 31a via the hopper 31f is melted. The screw 32 rotates inside the cylinder body 31a in response to the rotation force from the plasticizing motor 34, and the plastic material is fed to the front side along a spiral groove of the screw 32. In this process, the plastic material is gradually melted. The screw 32 is moved rearward in response to the supply of the molten plastic material to the front side of the screw 32, and the molten plastic material is stored in the storage space 31e (referred to as a "plasticizing process") . A rotation speed of the screw 32 is detected using an encoder of the plasticizing motor 34. In the plasticizing process, the injection motor 35 may be driven to apply a preset back pressure to the screw 32 in order to limit the sudden rearward movement of the screw 32. The back pressure applied to the screw 32 is detected using a pressure detector, for example. The screw 32 moves rearward to a plasticizing completion position, and a predetermined amount of the molten plastic material is stored in the storage space 31e on the front side of the screw 32, thereby completing the plasticizing process.

Subsequently to the plasticizing process, in response to the driving force from the injection motor 35, the screw 32 moves toward the nozzle portion 31b to a filling completion position from a filling start position, and the molten plastic material stored in the storage space 31e is supplied into the mold unit 5 through a discharge port of the nozzle portion 31b (referred to as a "filling process"). The position or the speed of the screw 32 is detected using the encoder of the injection motor 35, for example. When the position of the screw 32 reaches a preset position, the filling process is switched to a holding pressure process (so-called V/P switching) . The position where the V/P switching is performed is referred to as a V/P switching position. The preset speed of the screw 32 may be changed depending on the position or a time of the screw 32.

When the position of the screw 32 reaches the preset position in the filling process, the screw 32 may be temporarily stopped at the preset position, and thereafter, the V/P switching may be performed. Immediately before the V/P switching, instead of stopping the screw 32, the screw 32 may be moved forward or rearward at low speed. A screw position detector that detects the position of the screw 32 and a screw speed detector that detects the speed of the screw 32 are not limited to the encoder of the injection motor 35, and other types of detectors can be used.

Subsequently to the filling process, a holding pressure of the plastic material on the front side of the screw 32 is maintained at a preset pressure in accordance with the forward movement of the screw 32, and the remaining plastic material is extruded to the mold unit 5 (referred to as the "holding pressure process "). The plastic material which is insufficient due to cooling shrinkage inside the mold unit 5 can be replenished. The holding pressure is detected using a pressure detector, for example. A preset value of the holding pressure may be changed depending on an elapsed time from the start of the holding pressure process. In the holding pressure process, the plastic material in the cavity inside the mold unit 5 is gradually cooled, and when the holding pressure process is completed, an entrance of the cavity is closed by the solidified plastic material. This state is referred to as gate seal, and prevents the backflow of the plastic material from the cavity. After the holding pressure process, a cooling process starts. In the cooling process, the plastic material in the cavity is solidified. In order to shorten a molding cycle time, the plasticizing process may be performed during the cooling process.

Subsequently to the holding pressure process, the above-described plasticizing process is performed.

The injection molding machine 1 has a control unit 7 (refer to Fig. 1) which stores a control system for controlling the mold clamping unit 2 and/or the injection unit 3. The control system stored in the control unit 7 performs sequence control on the mold clamping motor 26, the ejector motor, the plasticizing motor 34, and the injection motor 35. The control system performs mold closing, mold clamping, and mold opening, based on the control of the mold clamping motor 26. The control system performs plasticization, filling, and holding pressure, based on the control of the plasticizing motor 34 and the injection motor 35. The control system can eject a molding product from the movable mold 52 of the mold unit 5, based on the control of the ejector motor. The control system can align the cylinder 31 at a proper position, based on the control of the moving motor 36. The control system can perform temperature control on the heater 33 and the mold unit 5 in addition to the above-described control.

For example, in one molding cycle, the plasticizing process, the mold closing process, the mold clamping process, the filling process, the holding pressure process, the cooling process, the mold opening process, and the ejection process are performed in this order. The order described here is the order of the start times of the respective processes. The filling process, the holding pressure process, and the cooling process are performed until the mold clamping process is completed after the mold clamping process starts. The completion of the mold clamping process coincides with the start of the mold opening process. A plurality of processes may be simultaneously performed in order to shorten the molding cycle time. For example, the plasticizing process may be performed during the cooling process of the previous molding cycle. In this case, the mold closing process may be performed in an initial stage of the molding cycle. The filling process may start during the mold closing process. The ejection process may start during the mold opening process.

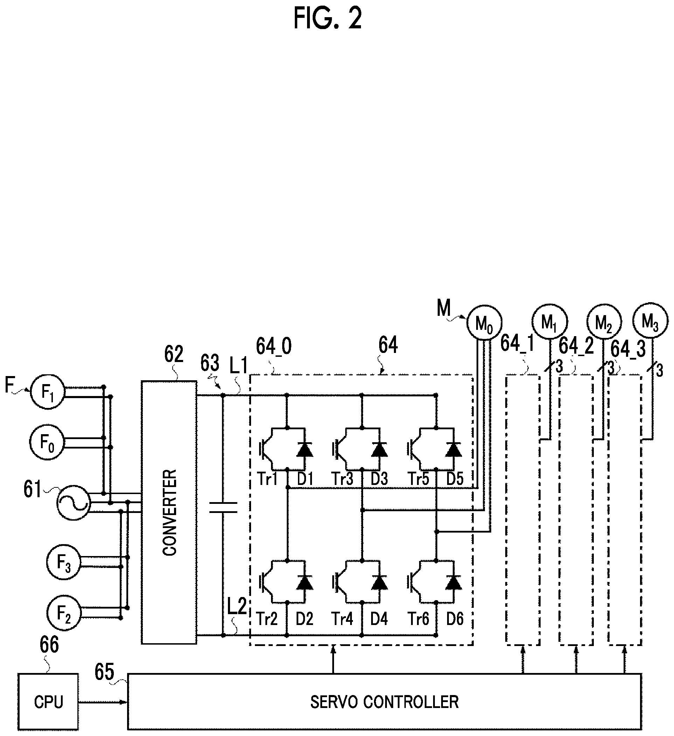

As illustrated in Fig. 2, the control system is configured to control a plurality of motors M (for example, illustrated motors M0 to M3). Each motor M is one selected from a group including the above-described mold clamping motor 26, mold space adjustment motor 27a, ejector motor, plasticizing motor 34, injection motor 35, and moving motor 36. In order to simplify the description, a total of four motors M0 to M3 are illustrated, but the number of motors to be controlled is not limited. For example, the motor M is a cage-type three-phase induction motor, and is operated in accordance with an input voltage having a U-V-W phase. Without being limited to the three-phase induction motor, a two-phase induction motor or a DC motor can be used.

The control system has an AC power supply (for example, a three-phase AC power supply) 61, a converter 62 for converting AC to DC, a smoothing circuit 63 for smoothing an output voltage of the converter 62, an inverter 64 connected between the converter 62 and the motor M, a servo controller 65 for supplying a switching signal to the inverter 64, and a CPU 66 for providing a control command to the servo controller 65. A plurality of fans F are connected to the AC power supply 61. An installation location and a function of the fan F will be described later. The fan F may be connected to a power supply different from converter 62. A switch for turning on/off the fan F may be disposed.

The converter 62 has a power supply wire L1 and a ground wire L2 as output wires. Smoothing circuit 63 includes a smoothing capacitor connected between power supply wire L1 and ground wire L2. The inverter 64 has first and second transistors Tr1 and Tr2 connected between the power supply wire L1 and the ground wire L2, third and fourth transistors Tr3 and Tr4 connected between the power supply wire L1 and the ground wire L2, fifth and sixth transistors Tr5 and Tr6 connected between the power supply wire L1 and the ground wire L2, and first to sixth freewheeling diodes D1 to D6 individually connected in parallel to the first to sixth transistors Tr1 to Tr6. A contact between the first and second transistors Tr1 and Tr2 is connected to a first terminal (for example, a U-terminal) of the motor M. A contact between the third and fourth transistors Tr3 and Tr4 is connected to a second terminal (for example, a V-terminal) of the motor M. A contact between the fifth and sixth transistors Tr5 and Tr6 is connected to a third terminal (for example, a W-terminal) of the motor M.

For example, the first to sixth transistors Tr1 to Tr6 are insulated gate bipolar transistors (IGBT) or metal-oxide semiconductor field-effect transistors (MOSFET). Each transistor is turned on/off in response to a switching signal supplied from the servo controller 65. The servo controller 65 provides a first switching signal for the first and second transistors Tr1 and Tr2, and provides a second switching signal for the third and fourth transistors Tr3 and Tr4, and provides a third switching signal for the fifth and sixth transistors Tr5 and Tr6. Each switching signal is a binary signal having an H-level and an L-level. For example, when the first switching signal is in the H-level, the first transistor Tr1 is turned on, and the second transistor Tr2 is turned off. When the second switching signal is in the L-level, the first transistor Tr1 is turned off, and the second transistor Tr2 is turned on. The same applies to the second and third switching signals. The first switching signal, the second switching signal, and the third switching signal are phase-shifted by 120° in this order. In this way, a three-phase voltage waveform (that is, an R-phase, an S-phase, and a T-phase) is supplied from the inverter 64 to the motor M. A filter circuit can be inserted between the inverter 64 and the motor M.

The main or sub CPU 66 generates a control command in accordance with a user's input command and/or an output signal of an encoder that measures a rotation speed of a rotor of the motor M, and the control command is transmitted to the servo controller 65. The servo controller 65 performs switching control of the inverter 64, based on the control command transmitted from the CPU 66. For example, the servo controller 65 performs pulse width modulation (PWM) control of the switching signal. In this manner, the above-described three-phase voltage waveform output from the inverter 64 is highly controlled.

The motors M0 to M3 are operated synchronously or asynchronously. The same applies to the inverters 64_0 to 64_3. A form is also assumed in which a separate servo controller is individually disposed for the plurality of inverters 64_0 to 64_3. The freewheeling diodes D1 to D6 can be omitted.

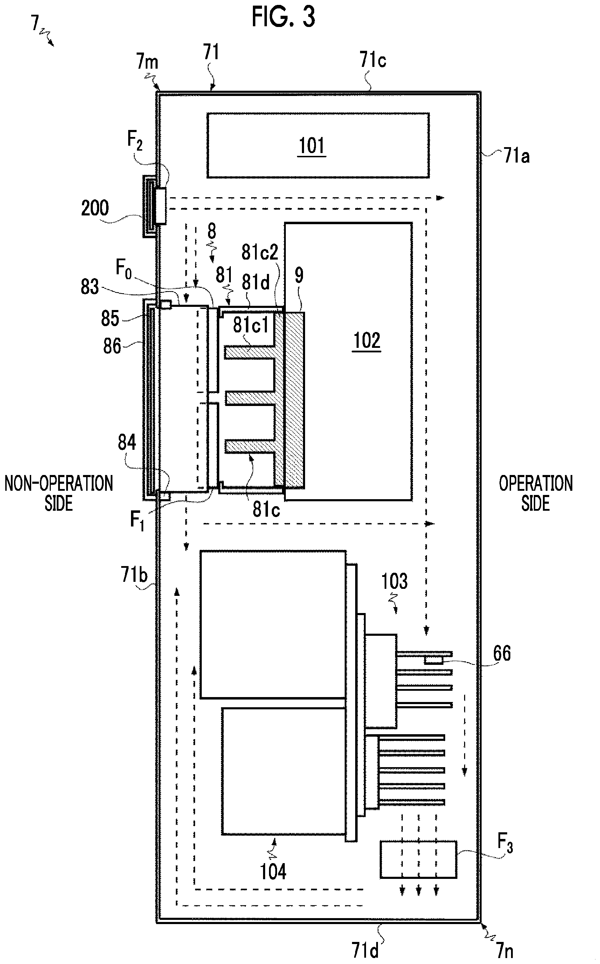

A configuration and an operation of the control unit 7 will be described with reference to Figs. 3 to 5. With regard to the injection molding machine 1 and the control unit 7, directions are defined as follows. An operation side is a side on which an input unit for operating the injection molding machine 1, for example, a touch panel is disposed. A non-operation side is a side opposite to the operation side. Typically, various cables such as a power line, a signal line, and a control line are drawn from the non-operation side of the control unit 7. A top side is a direction from the injection molding machine 1 toward a ceiling or the sky, and is equal to an upward side in a vertical direction. A ground side is a side opposite to the top side, is a direction from the ceiling or the sky toward the injection molding machine 1, and is equal to a downward side in the vertical direction.

The control unit 7 has a control unit housing 71. The control unit housing 71 is constructed using a side plate 71a on the operation side, a side plate 71b on the non-operation side, side plates 71c and 71d which connect the side plate 71a on the operation side and the side plate 71b on the non-operation side to each other, a side plate (lower side plate) 71e on the ground side, and a plurality of side plates such as the side plates (upper side plates) on the top side. An internal space of the control unit housing 71 is defined by the side plates. A bracket, a fastener (bolt and nut, or screw), and a sealing material (for example, silicone sealing material) are used to construct the control unit housing 71.

A first electrical component disposition section 101, a second electrical component disposition section 102, a third electrical component disposition section 103, and a fourth electrical component disposition section 104 are disposed in the internal space of the control unit housing 71. For example, breakers are disposed in the first electrical component disposition section 101. The motor driving element 9 such as the inverter 64 is disposed in the second electrical component disposition section 102. Computer hardware such as a motherboard on which the CPU 66 is mounted is disposed in the third electrical component disposition section 103. A sequence controlling relay of the heater 33 is disposed in the fourth electrical component arrangement section 104. An air-cooling heat sink (not illustrated) is mounted on a chip of the CPU 66. The number and an occupied volume of the electrical component disposition sections in the internal space of the control unit housing 71 may greatly vary depending on a type of the injection molding machine. Accordingly, disposition of the illustrated electrical components is to be understood as merely an example having no limitation.

The control unit housing 71 of the control unit 7 internally has the motor driving element 9, a cooling unit 8 for cooling the motor driving element 9, the CPU 66 for controlling the injection molding machine inside the housing, a fan (second fan) F₂ which draws air into the internal space from an external space of the control unit housing 71 so as to generate an airflow (second airflow) in the internal space of the control unit housing 71, and a fan (third fan) F₃ which promotes the airflow (second airflow) generated by an operation of the fan F₂ in the internal space of the control unit housing 71 to reach the CPU 66. For example, the motor driving element 9 is a surface-mounted element or a circuit chip including the above-described inverter 64, or a substrate on which the surface-mounted element or the circuit chip is mounted. As is well known, the inverter 64 generates heat in accordance with to a high-speed switching operation. A detailed configuration of the cooling unit 8 will be described later.

When the fan F₂ and the CPU 66 as a cooling target are located away from each other due to layout limitation in the control unit housing 71, the fan F₂ alone cannot supply a sufficient airflow to the CPU 66. Therefore, in this case, it is advantageous to provide a fan F₃ in addition to the fan F₂. Unlike the fan F₂, the fan F₃ does not draw the air into the internal space from the external space of the control unit housing 71. Therefore, even if the fan F₃ is additionally provided, dust does not significantly flow into the internal space by itself. With regard to the fan F₂, in order to prevent the dust from flowing into the internal space from the external space of the control unit housing 71 in accordance with an operation thereof, a dust collection filter (second dust collection filter) 200 that covers the fan F₂ is disposed outside the control unit housing 71. The dust collection filter 200 has higher filtering performance than a dust collection filter (first dust collection filter) 85 (to be described later) . In short, the dust collection filter 200 has a finer mesh structure in short.

The fan F₂ is disposed on the non-operation side, and the fan F₃ is disposed on the operation side, thereby promoting the airflow so as to more sufficiently reach the internal space of the control unit housing 71. Similarly, the fan F₂ is disposed in the vicinity of a first corner portion 7m of the control unit housing 71, and the fan F₃ is disposed in the vicinity of a second corner portion 7n located diagonally in the first corner portion 7m of the control unit housing 71, thereby promoting the airflow so as to more sufficiently reach the internal space of the control unit housing 71. The fan F₂ is attached to an opening portion of the side plate 71b, and the fan F₃ is disposed in the vicinity of the side plate 71a. The fan F₃ is disposed away from the side plates 71a and 71d of the control unit housing 71. The fan F₃ is disposed immediately above the side plate 71e on the ground side of the control unit housing 71, or is disposed upward away from the side plate 71e.

In some forms, the fan F₂ has highest blowing capability out of the fans F disposed in the control unit housing 71. In short, the fan F₂ has higher blowing capacity than the fan F₃, and has higher blowing capacity than fans (first fans) F₀ and F₁ (to be described later) . The blowing capacity is represented by a maximum air volume (m₃/h) obtained per unit time or a maximum rotation speed (rpm) of fan blades per unit time. The fan F3 has lower blowing capacity than the fans F₀ and F₁ (to be described later), and a relationship of fan F₂ > fan F₀, F₁ > fan F₃ is established with regard to the blowing capacity.

Power is asynchronously supplied to the fans F₀ and F₁ and the fans F₂ and F₃. The fans F₀ and F₁ are driven in synchronization with turning on/off of the power source of the motor driven by the motor driving element 9 (to be described later) . When the motor power is turned on, the fans F0 and F1 start rotating. When the motor power is turned off, the rotation of the fans F₀ and F₁ stops. The fans F₂ and F₃ are driven in synchronization with turning on/off of a control power supply (power supply of the control system in the control unit 7). When the control power is turned on, the rotation of the fans F₂ and F₃ starts. When the control power is turned off, the rotation of the fans F₂ and F₃ stops.

The fans F₀ to F₃ are electric fans such as an axial fan, a centrifugal fan, and a blower fan. For example, in a case where the fan is the axial fan, the fan has a fan motor (for example, a DC motor), a fan frame, and blades disposed inside the fan frame. The blade is attached to a rotary shaft of the fan motor, and rotates in response to an operation of the motor. In this manner, an airflow that flows through the fan frame is generated.

As will be understood from the following description, the cooling unit 8 is used for cooling the motor driving element 9, and is not used for cooling the CPU 66. There is a possibility that the CPU 66 may be insufficiently cooled since the cooling unit 8 is exclusively used for cooling the motor driving element 9. However, this possibility is avoided by using the fans F₂ and F₃.

The air flows into the internal space from the external space of the control unit housing 71 in response to the operation of the fan F₂. In response to the operation of the fan F₂, as indicated by a broken arrow, the control unit housing 71 internally has an airflow flowing through a space between the first electrical component disposition section 101 and the second electrical component disposition section 102 from the side plate 71b on the non-operation side toward the side plate 71a on the operation side, and an airflow flowing along the side plate 71b through a space between the side plate 71b on the non-operation side and the second electrical component disposition section 102.

The airflow flowing through the space between the first electrical component disposition section 101 and the second electrical component disposition section 102 flows along the side plate 71a through the space between the second electrical component disposition section 102 and the side plate 71a in response to the operation of the fan F3. Subsequently, the airflow flows along the side plate 71a through the space between the third electrical component disposition section 103 and the side plate 71a, and reaches the fan F₃. In response to the operation of the fan F₃, the airflow flowing along the side plate 71b flows through the space between the second electrical component disposition section 102 and the fourth electrical component disposition section 104. Thereafter, the airflow flows toward the side plate 71a on the operation side through the space between the second electrical component disposition section 102 and the third electrical component disposition sections 103. Subsequently, the airflow flows along the side plate 71a through the space between the third electrical component disposition section 103 and the side plate 71a, and reaches the fan F₃. In this way, in accordance with the cooperation of the fan F₂ and the fan F₃, the airflow flowing into the internal space from the external space of the control unit housing 71 flows to the third electrical component disposition section 103, thereby cooling the CPU cooling heat sink and the CPU 66.

Preferably, the fan F₃ is disposed on a downstream side of the CPU 66 in a flowing direction of the airflow for cooling the CPU 66. In a case where the fan F₃ is disposed on an upstream side of the CPU 66, there is a possibility that the dust may be strongly blown to the CPU 66 in response to the operation of the fan F₃. The airflow passing through the fan F₃ flows along the side plate 71d through the space between the fourth electrical component disposition section 104 and the side plate 71d. Subsequently, the airflow flows along the side plate 71b through the space between the fourth electrical component disposition section 104 and the side plate 71b.

As illustrated in Figs. 3 to 5, the cooling unit 8 has a flow path member 81, the fan F (for example, fans F₀ and F₁), one or more ducts 83, one or more sealing materials 84, and one or more dust collection filters 85, and one or more protective plates 86. The flowpath member 81 includes a heat sink thermally connected to the motor driving element 9. The fan F forms a flow path 82 together with at least the flow path member 81, and is configured to generate a first airflow flowing through the flow path 82. The fan F is fluidly connected to the flow path member 81 in order to form the flow path 82 (or a portion thereof) together. The airflow generated by the operation of the fan F flows through the internal space of the flow path member 81. In this manner, the heat sink of the flow path member 81 is cooled, and subsequently, the motor driving element 9 is cooled. The duct 83 is an optional part, and forms the flow path 82 together with the flow path member 81 and the fan F. The duct 83 is fluidly connected to the flow path member 81 and/or the fan F in order to form the flow path 82 (or a portion thereof) together. The sealing material 84 is used for preventing the air from flowing into the flow path 82 from the internal space of the control unit housing 71. For example, the sealing material 84 is disposed between the duct 83 and the side plate of the control unit housing 71.

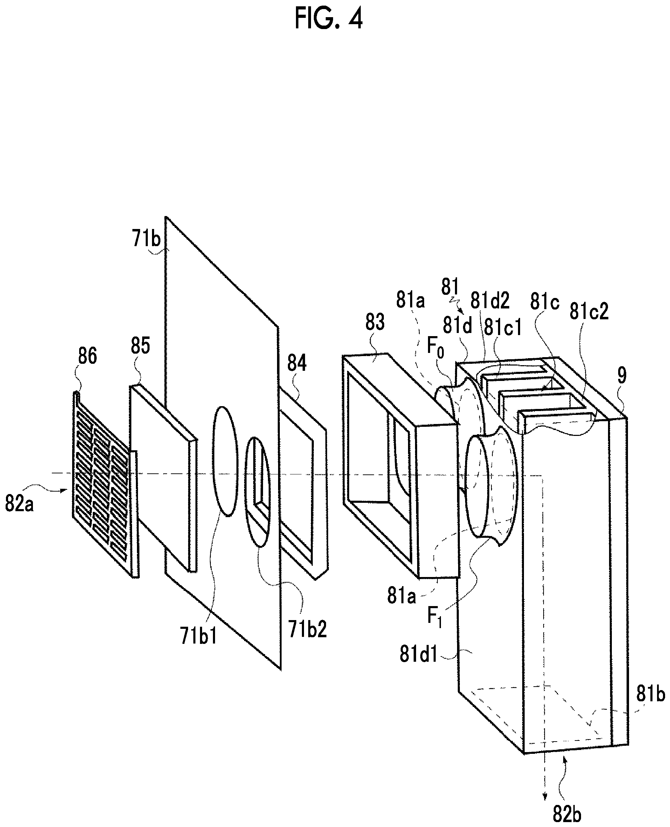

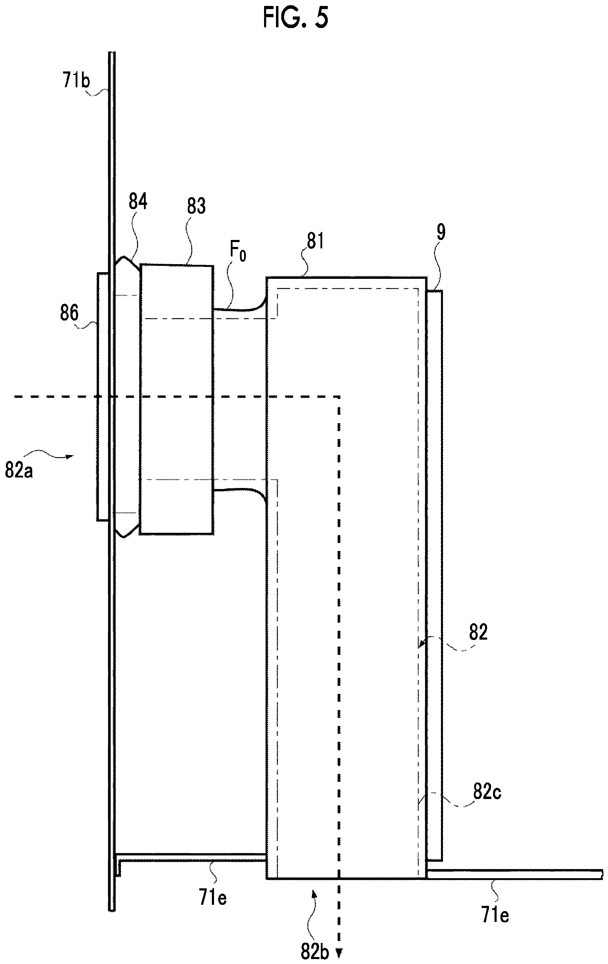

In some forms, the flow path 82 (refer to Fig. 5) is constructed by the flow path member 81 and the fans F₀ and F₁. In another form, the flow path 82 (refer to Fig. 5) is constructed by the flow path member 81, the fans F₀ and F₁, and the duct 83. The flow path 82 is configured so that the airflow generated in the flow path 82 by the operation of the fans F₀ and F₁ does not flow into the internal space of the control unit housing 71 (airflow is schematically indicated by a chain line arrow in Fig. 4). The flow path 82 has an inlet 82a on the side plate 71b (first side surface portion), an outlet 82b on the side plate 71e (second side surface portion), and further has an isolation flow path 82c extending between the inlet 82a and the outlet 82b. The isolation flow path 82c is isolated from the internal space of the control unit housing 71, and is not fluidly connected to the internal space of the control unit housing 71. A degree of isolation between the internal space of the control unit housing 71 and the flow path 82 is set to such an extent that the airflow generated in the flow path 82 by the operation of the fans F₀ and F₁ does not flow into the internal space of the control unit housing 71. For example, the degree does not require high-level air-tight sealing or liquid-tight sealing. A fact that the airflow does not flow into the internal space of the control unit housing 71 from the isolation flow path 82c can be analyzed using fluid analysis software. It is not essential to dispose the inlet 82a and the outlet 82b on different side plates. A form is conceivable in which both of these are formed on the same side plate, for example, the side plate 71b on the non-operation side.

In the operation of the injection molding machine 1 (mold closing, mold clamping, mold opening, plasticizing, filling, and holding pressure), the motor is continuously driven, and therefore, the inverter 64 continuously generates the heat. In order to avoid overheating of the inverter 64, it is desirable to efficiently remove the heat of the inverter 64. In the present embodiment, the flow path 82 is configured so that the airflow generated in the flow path 82 by the operation of the fans F₀ and F_ does not flow into the internal space of the control unit housing 71. Therefore, even if the blades of the fans F₀ and F₁ are rotated at a high speed, even when the dust passing through the dust collection filter 85 flows into the flow path 82 due to the operation of the fans F₀ and F₁, the dust does not flow into the internal space of the control unit housing 71. It is possible to compatibly achieve efficiently cooling the inverter 64 and suppressing dust accumulation inside the control unit housing 71.

The flow path 82 is isolated from the internal space. Accordingly, the airflow is not generated in the internal space of the control unit housing 71 by the operation of the fans F₀ and F₁, and the heating elements other than the motor driving element 9, for example, the CPU 66 cannot be cooled by the air. However, this can be avoided by adding another fan F (for example, the fans F₂ and F₃) to the control unit housing 71.

The flow path member 81 has at least one inlet 81a and at least one outlet 81b. In some forms, the inlet 81a of the flow path member 81 is coincident with or different from the inlet 82a of the flow path 82. Similarly, the outlet 81b of the flow path member 81 is coincident with or different from the outlet 82b of the flow path 82. The flow path member 81 is configured so that the airflow flowing through the flow path 82 by the operation of the fan F does not flow into the internal space of the control unit housing 71 between the inlet 81a and the outlet 81b of the flow path member 81.

The flow path member 81 includes a heat sink 81c thermally connected to the motor driving element 9. The heat sink 81c includes a plurality of heat radiation fins 81c1 and a base plate 81c2 to which the plurality of heat radiation fins 81c1 are coupled. Each of the heat radiation fins 81c1 is a flat plate portion extending along the flowing direction of the airflow so as not to hinder the airflow in the flow path 82. A portion of the flow path 82 is defined between the heat radiation fins 81c1 adjacent to each other. A shape of the heat sink is not limited to the illustrated example. It is possible to adopt a heat sink in which a heat radiation portion is disposed in a dot shape or a spiral shape.

The flow path member 81 has a cover 81d attached to the heat sink 81c. A portion of the flow path 82 is defined between the cover 81d and the heat sink 81c. The cover 81d is attached to the heat sink 81c by using any desired method such as welding, fastening, or fitting. As in the heat sink 81c, the cover 81d may be made of metal. In the schematic view of Fig. 4, the cover 81d is partially removed to illustrate a structure of the heat sink 81c.

The fans F₀ and F₁ are disposed between the side plate 71b of the control unit housing 71 and the flow path member 81, and fluidly connect opening portions 71b1 and 71b2 of the side plate 71b to the flow path member 81. In response to the operation of the fans F₀ and F₁, the air flows in from the external space of the control unit housing 71 through the inlet 82a of the flow path 82, flows through the isolation flow path 82c, and flows out through the outlet 82b. Since the number of fans F₀ and F₁ increases, the airflow can be generated in a wide range, and/or a flow rate of the airflow per unit time can be increased. A form is conceivable in which the fan F is disposed between the side plate 71e of the control unit housing 71 and the flow path member 81 so as to fluidly connect the opening portion of the side plate 71e and the flow path member 81 to each other.

As in the fans F₂ and F₃, the fans F₀ and F₁ are the electric fans such as the axial fan, the centrifugal fan, and the blower fan. In some cases, the fans F₀ and F₁ can be disposed along a disposition direction of the heat radiation fins 81c1 so that a larger area can be cooled using a small-size electric fan. The dust collection filter 85 is disposed to cover the opening portions 71b1 and 71b2 of the side plate 71b of the control unit housing 71. Accordingly, it is possible to suppress a possibility that the dust may flow into the flow path 82 from the external space of the control unit housing 71 due to the operation of the fans F₀ and F₁. The dust collection filter 85 has lower filtering performance than the above-described dust collection filter 200.

A position for disposing the fans F₀ and F₁ can be selected in various ways. In some forms, the fans F₀ and F₁ are attached to the flow path member 81. However, the invention is not necessarily limited thereto. A form is conceivable in which the fans F₀ and F₁ are attached to the side plates 71b and 71e, and a form is also conceivable in which the fans F₀ and F₁ are attached to the duct 83. A position for attaching the fans F₀ and F₁ to the flow path member 81 can be selected in various ways. In the illustrated example, the fans F₀ and F₁ are disposed on a side surface 81d1 on the non-operation side of the cover 81d facing the side plate 71b of the control unit housing 71. In another form, the fans F₀ and F₁ are disposed on a side surface 81d2 on the top side of the cover 81d.

The duct 83 is attached to the flow path member 81 in a form of surrounding the fans F₀ and F₁. The duct 83 can have various shapes such as a straight duct, a curved duct, and an L-shaped duct. In the illustrated example, the duct 83 is the straight duct having a rectangular cross section, and is disposed between the side plate 71b of the control unit housing 71 and the flow path member 81. The sealing material 84 is disposed between the duct 83 and the side plate 71b of the control unit housing 71, thereby avoiding a possibility that the air in the internal space of the control unit housing 71 may flow into the flow path 82 from a gap between the duct 83 and the control unit housing 71 due to the operation of the fan F. If necessary, the sealing material 84 may be disposed between the flow path member 81 and the duct 83.

Based on the above disclosure, those skilled in the art can add various modifications to each embodiment and each feature.

### Brief Description of the Reference Symbols

1: Injection molding machine
2: mold clamping unit
3: injection unit
7: control unit
8: cooling unit
9: motor driving element
61: AC power supply
62: converter
63: smoothing circuit
64: inverter
65: servo controller
66: CPU
71: control unit housing
81: flow path member
81c: heat sink
82: flow path
83: duct
84: sealing material
85: dust collection filter
101: first electrical component disposition section
102: second electrical component disposition section
103: third electrical component disposition section
104: fourth electrical component disposition section
200: dust collection filter
F: fan
M: motor

## Claims

1. A control unit (7) of an injection molding machine (1), comprising:
a motor driving element (9) disposed in an internal space of a control unit housing (71); and
a cooling unit (8) for cooling the motor driving element (9),
wherein the cooling unit (8) includes
a flow path member (81) including a heat sink (81c) thermally connected to the motor driving element (9), and
at least one first fan (F₀, F₁) forming a flow path (82) together with at least the flow path member (81), and configured to generate a first airflow flowing through the flow path (82), and
wherein the flow path (82) has an inlet (82a) in a first side surface portion (71b) of the control unit housing (71), has an outlet (82b) in a second side surface portion (71e) of the control unit housing (71), and is configured to prevent the first airflow flowing in the flow path (82) from flowing out of the flow path (82) in the control unit housing (71) by an operation of the first fan (F), **characterized in that**
the cooling unit (8) further includes at least one duct (83) that forms the flow path (82) together with the flow path member (81) and the first fan (F), and the duct (83) is attached to the flow path member (81) in a form of surrounding the first fan (F), and
wherein the cooling unit (8) further includes a sealing material (84) disposed between the control unit housing (71) and the duct (83).

2. The control unit (7) according to claim 1, further comprising:
an injection molding machine controlling CPU (66) disposed outside the flow path (82) in the internal space of the control unit housing (71); and
a second fan (F₂) that draws air into the internal space from an external space of the control unit housing (71) and generates a second airflow in the internal space of the control unit housing (71).

3. The control unit (7) according to claim 2, further comprising:
a third fan (F₃) disposed to promote the second airflow generated by an operation of the second fan (F₂) in the internal space of the control unit housing (71) to reach the CPU (66).

4. The control unit (7) according to claim 3,
wherein the third fan (F₃) is disposed on a downstream side of the CPU (66) in a flowing direction of the second airflow.

5. The control unit (7) according to claim 3 or 4,
wherein the first fan (F) and the second fan (F₂) are disposed on a non-operation side, and the third fan (F₃) is disposed on an operation side.

6. The control unit (7) according to any one of claims 3 to 5,
wherein the second fan (F₂) and the third fan (F₃) are disposed in a vicinity of first and second corners (7m, 7n) located diagonally in the control unit housing (71).

7. The control unit (7) according to any one of claims 2 to 6, further comprising:
a first dust collection filter (85) that covers an inlet of the flow path (82); and
a second dust collection filter (200) disposed to cover the second fan (F₂) outside the control unit housing (71),
wherein the second dust collection filter (200) has higher filtering performance than the first dust collection filter (85) .

8. An injection molding machine (1) comprising:
the control unit (7) according to any one of claims 1 to 7.

9. The control unit (7) according to claim 1, further comprising:
an injection molding machine controlling CPU (66) disposed in the internal space of the control unit housing (71); and
a second fan (F₂) that draws air into the internal space from an external space of the control unit housing (71) and generates a second airflow in the internal space of the control unit housing (71),
wherein the first side surface portion (71b) is located on a non-operation side and the second side surface portion (71e) is located on a ground side.

10. The control unit (7) according to claim 9, further comprising:
a third fan (F₃) disposed to promote the second airflow generated by an operation of the second fan (F₂) in the internal space of the control unit housing (71) to reach the CPU (66).

11. The control unit (7) according to claim 10,
wherein the third fan (F₃) is disposed on a downstream side of the CPU (66) in a flowing direction of the second airflow.

## Patentansprüche

1. Steuerungseinheit (7) einer Spritzgießmaschine (1), umfassend:
ein Motorantriebselement (9), das in einem Innenraum eines Steuerungseinheitsgehäuses (71) angeordnet ist; und
eine Kühleinheit (8) zum Kühlen des
Motorantriebselements (9),
wobei die Kühleinheit (8)
ein Strömungswegbauteil (81), das eine Wärmesenke (81c) umfasst, die thermisch mit dem Motorantriebselement (9) verbunden ist, und
zumindest einen ersten Lüfter (F₀, F₁), der zusammen mit zumindest dem Strömungswegbauteil (81) einen Strömungsweg (82) bildet, und konfiguriert ist, eine erste Luftströmung zu erzeugen, die durch den Strömungsweg (82) strömt, umfasst, und
wobei der Strömungsweg (82) einen Einlass (82a) in einem ersten Seitenoberflächenabschnitt (71b) des Steuerungseinheitsgehäuses (71) aufweist, einen Auslass (82b) in einem zweiten
Seitenoberflächenabschnitt (71e) des Steuerungseinheitsgehäuses (71) aufweist, und
konfiguriert ist zu verhindern, dass die erste Luftströmung, die in dem Strömungsweg (82) strömt, aus dem Strömungsweg (82) in dem Steuerungseinheitsgehäuse (71) durch einen Betrieb des ersten Lüfters (F) herausströmt,
**dadurch gekennzeichnet, dass**
die Kühleinheit (8) ferner zumindest einen Schacht (83) umfasst, der zusammen mit dem Strömungswegbauteil (81) und dem ersten Lüfter (F) den Strömungsweg (82) bildet, und der Schacht (83) an dem Strömungswegbauteil (81) derart befestigt ist, dass er den ersten Lüfter (F) umgibt, und
wobei die Kühleinheit (8) ferner ein Dichtungsmaterial (84) umfasst, das zwischen dem
Steuerungseinheitsgehäuse (71) und dem Schacht (83) angeordnet ist.

2. Steuerungseinheit (7) nach Anspruch 1, ferner umfassend:
eine Spritzgießmaschinensteuerungs-CPU (66), die außerhalb des Strömungswegs (82) in dem Innenraum des Steuerungseinheitsgehäuses (71) angeordnet ist; und
einen zweiten Lüfter (F₂), der aus einem Raum außerhalb des Steuerungseinheitsgehäuses (71) Luft in den Innenraum saugt und eine zweite Luftströmung in dem Innenraum des Steuerungseinheitsgehäuses (71) erzeugt.

3. Steuerungseinheit (7) nach Anspruch 2, ferner umfassend:
einen dritten Lüfter (F₃), der angeordnet ist, um die zweite Luftströmung, die durch einen Betrieb des zweiten Lüfters (F₂) in dem Innenraum des Steuerungseinheitsgehäuses (71) erzeugt wird, dabei zu unterstützen, die CPU (66) zu erreichen.

4. Steuerungseinheit (7) nach Anspruch 3,
wobei der dritte Lüfter (F₃) auf einer Seite stromabwärts der CPU (66) in einer Strömungsrichtung der zweiten Luftströmung angeordnet ist.

5. Steuerungseinheit (7) nach Anspruch 3 oder 4, wobei der erste Lüfter (F) und der zweite Lüfter (F₂) auf einer Nichtbetriebsseite angeordnet sind, und der dritte Lüfter (F₃) auf einer Betriebsseite angeordnet ist.

6. Steuerungseinheit (7) nach einem der Ansprüche 3 bis 5,
wobei der zweite Lüfter (F₂) und der dritte Lüfter (F₃) in einer Nähe von ersten und zweiten Ecken (7m, 7n) angeordnet sind, die diagonal in dem Steuerungseinheitsgehäuse (71) positioniert sind.

7. Steuerungseinheit (7) nach einem der Ansprüche 2 bis 6, ferner umfassend:
einen ersten Staubauffangfilter (85), der einen Einlass des Strömungswegs (82) abdeckt; und
einen zweiten Staubauffangfilter (200), der angeordnet ist, um den zweiten Lüfter (F₂) außerhalb des Steuerungseinheitsgehäuses (71) abzudecken,
wobei der zweite Staubauffangfilter (200) eine höhere Filterleistung als der erste Staubauffangfilter (85) aufweist.

8. Spritzgießmaschine (1), umfassend:
die Steuerungseinheit (7) nach einem der Ansprüche 1 bis 7.

9. Steuerungseinheit (7) nach Anspruch 1, ferner umfassend:
eine Spritzgießmaschinensteuerungs-CPU (66), die in dem Innenraum des Steuerungseinheitsgehäuses (71) angeordnet ist; und
einen zweiten Lüfter (F₂), der aus einem Raum außerhalb des Steuerungseinheitsgehäuses (71) Luft in den Innenraum saugt und eine zweite Luftströmung in dem Innenraum des Steuerungseinheitsgehäuses (71) erzeugt,
wobei der erste Seitenoberflächenabschnitt (71b) auf einer Nichtbetriebsseite positioniert ist und der zweite Seitenoberflächenabschnitt (71e) an einer Bodenseite positioniert ist.

10. Steuerungseinheit (7) nach Anspruch 9, ferner umfassend:
einen dritten Lüfter (F₃), der angeordnet ist, um die zweite Luftströmung, die durch einen Betrieb des zweiten Lüfters (F₂) in dem Innenraum des Steuerungseinheitsgehäuses (71) erzeugt wird, dabei zu unterstützen, die CPU (66) zu erreichen.

11. Steuerungseinheit (7) nach Anspruch 10,
wobei der dritte Lüfter (F₃) auf einer Seite stromabwärts der CPU (66) in einer Strömungsrichtung der zweiten Luftströmung angeordnet ist.

## Revendications

1. Une unité de commande (7) d'une machine de moulage par injection (1) comprenant :
un élément d'entraînement de moteur (9) disposé dans un espace interne d'un logement d'unité de commande (71) ; et
une unité de refroidissement (8) pour refroidir l'élément d'entraînement de moteur (9),
dans laquelle l'unité de refroidissement (8) inclut
un élément de trajet d'écoulement (81) incluant un dissipateur thermique (81c) relié thermiquement à l'élément d'entraînement de moteur (9), et
au moins un premier ventilateur (F₀, F₁) formant un trajet d'écoulement (82) conjointement avec au moins l'élément de trajet d'écoulement (81), et configuré pour générer un premier écoulement d'air s'écoulant à travers le trajet d'écoulement (82), et
dans laquelle le trajet d'écoulement (82) présente une entrée (82a) dans une première partie de surface latérale (71b) du logement d'unité de commande (71), présente une sortie (82b) dans une seconde partie de surface latérale (71e) du logement d'unité de commande (71), et est conçu pour empêcher le premier écoulement d'air s'écoulant dans le trajet d'écoulement (82) de s'écouler hors du trajet d'écoulement (82) dans le logement d'unité de commande (71) grâce à un fonctionnement du premier ventilateur (F),
**caractérisée en ce que**
l'unité de refroidissement (8) inclut en outre au moins une conduite (83) qui forme le trajet d'écoulement (82) conjointement avec l'élément de trajet d'écoulement (81) et le premier ventilateur (F), et la conduite (83) est fixée à l'élément de trajet d'écoulement (81) de façon à entourer le premier ventilateur (F), et
dans laquelle l'unité de refroidissement (8) inclut en outre un matériau d'étanchéité (84) disposé entre le logement d'unité de commande (71) et la conduite (83).

2. L'unité de commande (7) selon la revendication 1, comprenant en outre :
un CPU de commande de machine de moulage par injection (66) disposée à l'extérieur du trajet d'écoulement (82) dans l'espace interne du logement d'unité de commande (71) ; et
un deuxième ventilateur (F₂) qui aspire de l'air dans l'espace interne à partir d'un espace externe du logement d'unité de commande (71) et génère un second écoulement d'air dans l'espace interne du logement d'unité de commande (71).

3. L'unité de commande (7) selon la revendication 2, comprenant en outre :
un troisième ventilateur (F₃) disposé de manière à permettre au second écoulement d'air généré par un fonctionnement du deuxième ventilateur (F₂) dans l'espace interne du logement d'unité de commande (71) d'atteindre la CPU (66).

4. L'unité de commande (7) selon la revendication 3,
dans laquelle le troisième ventilateur (F₃) est disposé sur un côté aval de la CPU (66) dans une direction d'écoulement du second écoulement d'air.

5. L'unité de commande (7) selon la revendication 3 ou 4,
dans laquelle le premier ventilateur (F) et le deuxième ventilateur (F₂) sont disposés sur un côté de non-fonctionnement, et le troisième ventilateur (F₃) est disposé sur un côté de fonctionnement.

6. L'unité de commande (7) selon l'une quelconque des revendications 3 à 5,
dans laquelle le deuxième ventilateur (F₂) et le troisième ventilateur (F₃) sont disposés au voisinage des premier et second angles (7m, 7n) situés en diagonale dans le logement d'unité de commande (71).

7. L'unité de commande (7) selon l'une quelconque des revendications 2 à 6, comprenant en outre :
un premier filtre de collecte de poussière (85) qui couvre une entrée du trajet d'écoulement (82) ; et
un second filtre de collecte de poussière (200) disposé de manière à couvrir le deuxième ventilateur (F₂) à l'extérieur du logement d'unité de commande (71),
dans laquelle le second filtre de collecte de poussière (200) présente une performance de filtrage plus élevée que le premier filtre de collecte de poussière (85).

8. Une machine de moulage par injection (1) comprenant :
l'unité de commande (7) selon l'une quelconque des revendications 1 à 7.

9. L'unité de commande (7) selon la revendication 1, comprenant en outre :
un CPU de commande de machine de moulage par injection (66) disposée dans l'espace interne du logement d'unité de commande (71) ; et
un deuxième ventilateur (F₂) qui aspire de l'air dans l'espace interne à partir d'un espace externe du logement d'unité de commande (71) et génère un second écoulement d'air dans l'espace interne du logement d'unité de commande (71),
dans laquelle la première partie de surface latérale (71b) est située sur un côté de non-fonctionnement et la seconde partie de surface latérale (71e) est située sur un côté sol.

10. L'unité de commande (7) selon la revendication 9, comprenant en outre :
un troisième ventilateur (F₃) disposé de sorte à permettre au second écoulement d'air généré par un fonctionnement du deuxième ventilateur (F₂) dans l'espace interne du logement d'unité de commande (71) d'atteindre la CPU (66).

11. L'unité de commande (7) selon la revendication 10,
dans laquelle le troisième ventilateur (F₃) est disposé sur un côté aval du CPU (66) dans une direction d'écoulement du second écoulement d'air.
